# EUROPEAN PATENT APPLICATION

(11) **EP 3 627 470 A1**
(43) Date of publication of application: **25.03.2020**
(21) Application number: 17910176.1
(22) Date of filing: 16.05.2017
(51) Int. Cl.: G08G 1/00, G08G 1/16

(54) **MOVEMENT PREDICTION METHOD FOR TRAVEL ASSISTANCE DEVICE AND MOVEMENT PREDICTION DEVICE**

(71) Applicant: Nissan Motor Co., Ltd., Yokohama-shi, Kanagawa 221-0023 (JP)
(72) Inventor: NANRI, Takuya, Atsugi-shi Kanagawa 243-0123 (JP); FANG, Fang, Atsugi-shi Kanagawa 243-0123 (JP); TAKEI, Shoichi, Atsugi-shi Kanagawa 243-0123 (JP)
(74) Representative: Grünecker Patent- und Rechtsanwälte PartG mbB
(86) International application number: PCT/JP2017/018297
(87) International publication number: WO 2018/211582

(57) **Abstract**

An action prediction method for predicting an action of another vehicle (52) around a host vehicle (51), acquires information on conditions (53, 54a, 54b) of a road surface around the other vehicle (52), and predicts the action of the other vehicle (52) in accordance with the information on the conditions (53, 54a, 54b) of the road surface.

## Description

### TECHNICAL FIELD

The present invention relates to an action prediction method and an action prediction device of a traveling assistance device for assisting a host vehicle in traveling in accordance with prediction results of an action of another vehicle around the host vehicle.

### BACKGROUND ART

A vehicle control device is known that estimates a possibility that a preceding vehicle deviates from a corner of a traveling lane, based on the information on the corner ahead of the preceding vehicle and the velocity of the preceding vehicle during the approach toward the corner, so as to control the host vehicle in accordance with the estimation result.

### CITATION LIST

### PATENT LITERATURE

Patent Document 1: Japanese Unexamined Patent Application Publication No. 2006-240444

### SUMMARY OF INVENTION

### TECHNICAL PROBLEM

The vehicle control device disclosed in Patent Document 1 which predicts an action of the other vehicle based on a structure of a traveling road still has a problem of accurately predicting the action of the other vehicle depending on the conditions of the road surface.

To solve the conventional problem described above, the present invention provides an action prediction method and an action prediction device of a traveling assistance device capable of improving the accuracy of predicting an action of another vehicle.

### TECHNICAL SOLUTION

An action prediction method of a traveling assistance device according to an aspect of the present invention acquires information on a condition of a road surface around another vehicle, and predicts the action of the other vehicle in accordance with the information on the condition of the road surface.

### ADVANTAGEOUS EFFECTS

The aspect of the present invention can improve the accuracy of predicting the action of the other vehicle.

### BRIEF DESCRIPTION OF DRAWINGS

[Fig. 1] Fig. 1 is a block diagram showing a configuration of a traveling assistance device and an action prediction device according to an embodiment.
[Fig. 2] Fig. 2 is a flowchart showing an example of an operation of the traveling assistance device and the action prediction device shown in Fig. 1.
[Fig. 3] Fig. 3 is a flowchart showing a specific process in step S06 shown in Fig. 2.
[Fig. 4] Fig. 4 is a zenith view illustrating a traveling situation on a two-lane, one-way road in which a host vehicle 51 is traveling in the right lane, another vehicle 52 is traveling in parallel in the left lane obliquely ahead of the host vehicle 51, and a pedestrian 55 is present in a sidewalk around a puddle 53.
[Fig. 5] Fig. 5 is a zenith view illustrating a traveling situation on a two-lane, one-way road in which the host vehicle 51 is traveling in the right lane, the other vehicle 52 is traveling in parallel in the left lane obliquely ahead of the host vehicle 51, and a preceding vehicle 56 is present in the lane adjacent to the puddle 53.
[Fig. 6] Fig. 6 is a zenith view illustrating a case in which the other vehicle 52 is stopping in an intersection, and ruts 54a and 54b are created on the road surface around the other vehicle 52.
[Fig. 7A] Fig. 7A is a zenith view illustrating a primary course (forward movement) 61 and an effective course (forward movement) 71 of the other vehicle 52 traveling on a two-lane curved road.
[Fig. 7B] Fig. 7B is a zenith view illustrating a primary course (lane change) 62 and an effective course (lane change) 72 of the other vehicle 52 traveling on the two-lane curved road.

### DESCRIPTION OF EMBODIMENTS

Hereinafter, an embodiment will be described in detail with reference to the drawings.

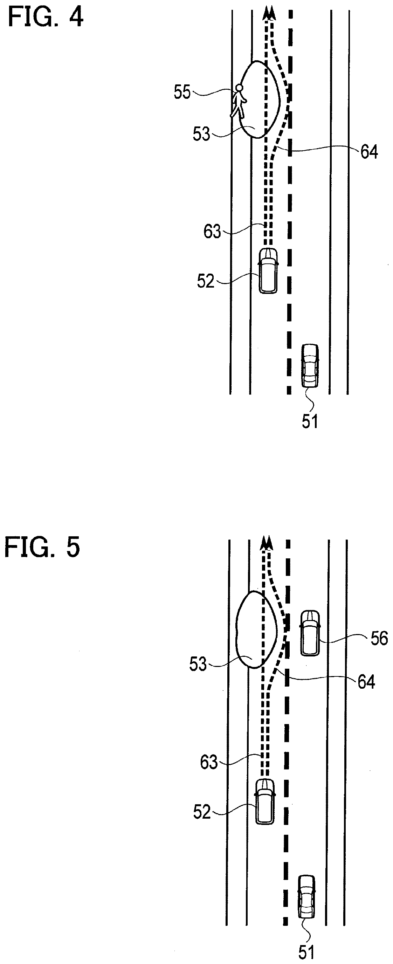

A traveling assistance device according to the embodiment is effective for use in a traveling situation as shown in Fig. 4, for example. Fig. 4 illustrates a case in which a host vehicle 51 is traveling in the right lane on a two-lane, one-way road, and another vehicle 52 is traveling in parallel in the left lane obliquely ahead of the host vehicle 51. A puddle 53 is present in the left lane ahead of the other vehicle 52 in the traveling direction, and a course 63 in the left lane that the other vehicle 52 is following overlaps with the puddle 53. The other vehicle 42, when keeping traveling in the left lane, would then pass through the puddle 53.

The other vehicle 52, however, could slightly shift the course to the right so as to avoid the puddle 53 and keep the traveling direction, as indicated by a course 64 shown in Fig. 4. The other vehicle 52 thus has a possibility (likelihood ratio) of choosing the course 64 instead of the course 63.

The prediction of the course of the other vehicle in view of the conditions of the road surface, such as the puddle 53, as described above improves the accuracy of predicting the action of the other vehicle. The host vehicle 51 thus can predict the action that the other vehicle 52 would take to deviate toward the lane in which the host vehicle 51 is traveling, so as to avoid a sudden change in its behavior, reducing the discomfort of the occupant in the host vehicle 51.

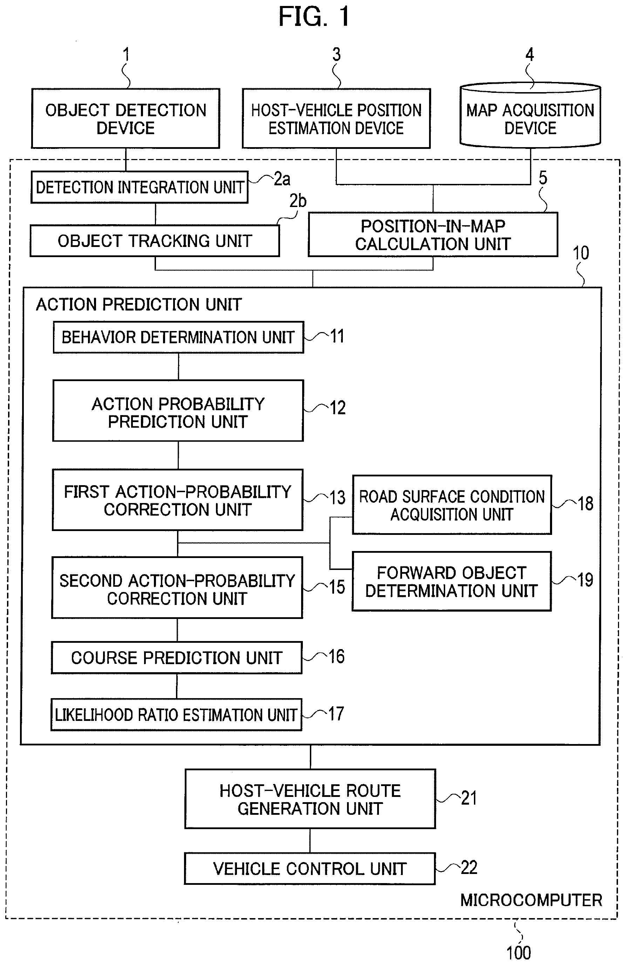

The configuration of the traveling assistance device according to the embodiment is described below with reference to Fig. 1. The traveling assistance device includes an object detection device 1, a host-vehicle position estimation device 3, a map acquisition device 4, and a microcomputer 100.

The object detection device 1 includes various kinds of object detection sensors mounted on the host vehicle 51, such as a laser radar, a millimeter-wave radar, and a camera, for detecting objects around the host vehicle 51. The object detection device 1 detects objects around the host vehicle 51 using these object detection sensors. The object detection device 1 detects moving objects such as other vehicles, motorcycles, bicycles, and pedestrians, and stationary objects such as parked vehicles. For example, the object detection device 1 detects a position, an attitude, a size, a velocity, acceleration, deceleration, and a yaw rate of a moving object or a stationary object on the basis of the host vehicle. As used herein, a position, an attitude (a yaw angle), a size, a velocity, acceleration, deceleration, and a yaw rate of an object are collectively referred to as "behavior" of the object. The object detection device 1 outputs, as detection results, the behavior of a two-dimensional object in the zenithal view (also referred to as a plan view) as viewed from the air above the host vehicle 51, for example.

The host-vehicle position estimation device 3 includes a position detection sensor mounted on the host vehicle 51, such as a global positioning system (GPS) and a means of odometry, for measuring an absolute position of the host vehicle 51. The host-vehicle position estimation device 3 measures the absolute position of the host vehicle 51, which is the position, the attitude, and the velocity of the host vehicle 51 based on a predetermined reference point, by use of the position detection sensor.

The map acquisition device 4 acquires map information indicating a structure of a road on which the host vehicle 51 is traveling. The map information acquisition device 4 may hold map database storing the map information, or may acquire the map information from an external map data server through cloud computing. The map information acquired by the map acquisition device 4 includes various pieces of information on the road structure, such as absolute positions of lanes, and a connectional relation and a relative positional relation of lanes.

The map acquisition device 4 also acquires frequently updated map information (such as information hidden in a dynamic map). In particular, the map acquisition device 4 acquires dynamic information updated with a frequency of one second or shorter, semi-dynamic information updated with a frequency of one minute or shorter, and semi-static information updated with a frequency of one hour or shorter, from the outside of the host vehicle 51 through wireless communication. Examples of dynamic information include peripheral vehicles, pedestrians, and traffic signals. Examples of semi-static information include traffic accidents, traffic congestion, and short-area weather conditions. Examples of semi-static information include traffic restrictions, road repairs, and wide-area weather conditions. As used herein, the term "map information indicating a structure of a road" corresponds to static information updated with a frequency of one hour or shorter.

The microcomputer 100 (an example of a controller) predicts an action of the other vehicle 52 in accordance with the detection results obtained by the object detection device 1 and the host-vehicle position estimation device 3 and the information acquired by the map acquisition device 4, generates a route of the host vehicle 51 depending on the action of the other vehicle 52, and controls the host vehicle 51 in accordance with the generated route.

The embodiment exemplifies the microcomputer 100 as the traveling assistance device for controlling the host vehicle 51, but is not limited to this case. For example, the microcomputer 100 may be applicable to the case of functioning as an action prediction device for predicting the action of the other vehicle. The microcomputer 100 thus may finally output the predicted action of the other vehicle without the route generation and the traveling control along the route generated for the host vehicle 51.

The microcomputer 100 is a general-purpose microcomputer including a central processing unit (CPU), a memory, and an input-output unit. A computer program (a traveling assistance program) is installed on the microcomputer 100 so as to function as the traveling assistance device. The microcomputer 100 functions as a plurality of information processing circuits (2a, 2b, 5, 10, 21, and 22) included in the traveling assistance device when the computer program is executed. While the embodiment is illustrated with the case in which the software is installed to fabricate the information processing circuits (2a, 2b, 5, 10, 21, and 22) included in the traveling assistance device, dedicated hardware for executing each information processing as described below can be prepared to compose the information processing circuits (2a, 2b, 5, 10, 21, and 22). The respective information processing circuits (2a, 2b, 5, 10, 21, and 22) may be composed of individual hardware. The information processing circuits (2a, 2b, 5, 10, 21, and 22) may also serve as an electronic control unit (ECU) used for other control processing with regard to the vehicle.

The microcomputer 100 includes, as the respective information processing circuits (2a, 2b, 5, 10, 21, and 22), a detection integration unit 2a, an object tracking unit 2b, a position-in-map calculation unit 5, an action prediction unit 10, a host-vehicle route generation unit 21, and a vehicle control unit 22. The action prediction unit 10 includes a behavior determination unit 11, an action-probability prediction unit 12, a first action-probability correction unit 13, a second action-probability correction unit 15, a course prediction unit 16, a likelihood ratio estimation unit 17, a road surface condition acquisition unit 18, and a forward object determination unit 19. When the microcomputer 100 is used as the action prediction device for predicting the action of the other vehicle, the information processing circuits as the host-vehicle route generation unit 21 and the vehicle control unit 22 are not necessarily included.

The detection integration unit 2a integrates several detection results obtained by the respective object detection sensors included in the object detection unit 1 to output a single detection result per object. In particular, the detection integration unit 2a calculates the behavior of an object, which is the most reasonable and has the least error among pieces of the behavior of the object detected by the respective object detection sensors, in view of error characteristics of the respective object detection sensors. The detection integration unit 2a collectively evaluates the detection results obtained by the various sensors so as to obtain a more accurate detection result for each object by a conventional sensor fusion method.

The object tracking unit 2b tracks each object detected by the object detection device 1. In particular, the object tracking unit 2b determines the sameness of the object (mapping) detected at intervals in accordance with the behavior of the object output at different times, by use of the detection result integrated by the detection integration unit 2a, and predicts the behavior of the object in accordance with the mapping result. Each piece of the behavior of the object output at different times is stored in the memory in the microcomputer 100, and is used for course prediction described below.

The position-in-map calculation unit 5 estimates the position and the attitude of the host vehicle 51 on the map according to the absolute position of the host vehicle 51 acquired by the host-vehicle position estimation device 3 and the map data acquired by the map acquisition device 4. For example, the position-in-map calculation unit 5 specifies the road on which the host vehicle 51 is traveling, and the traveling lane of the host vehicle 51 on the road.

The action prediction unit 10 predicts an action of a moving object around the host vehicle 51 in accordance with the detection result obtained by the detection integration unit 2a and the position of the host vehicle 51 specified by the position-in-map calculation unit 5. The specific configuration of the action prediction unit 10 is described in detail below.

The behavior determination unit 11 specifies the position and the behavior of the object on the map in accordance with the position of the host vehicle 51 on the map and the behavior of the object acquired by the detection integration unit 2a. The behavior determination unit 11 determines that the object is a moving object when the position of the object on the map changes with the passage of time, and determines the attribute of the moving object (a vehicle or a pedestrian, for example) in accordance with the size and the velocity of the moving object. When the moving object is determined to be another traveling vehicle, the behavior determination unit 11 specifies the road on which the other vehicle is traveling and its traveling lane.

When the position of the object on the map does not change with the passage of time, the behavior determination unit 11 determines that the object is a stationary object, and determines the attribute of the stationary object (the other vehicle which is stopping, a parked vehicle, or a pedestrian, for example) in accordance with the position, the attitude, and the size of the stationary object on the map.

The action probability prediction unit 12 predicts a probability of action of the other vehicle based on the map. The action probability prediction unit 12 predicts the intention of action that the other vehicle would take next, based on the road structure included in the map information and the information on the lane to which the other vehicle belongs, and calculates a primary course of the other vehicle in accordance with the predicted intention of action based on the road structure. As used herein, the term "probability of action" refers to a superordinate concept including the intention of action and the primary course. The term "primary course" encompasses profiles of positions of the other vehicle at different times and also profiles of velocities of the other vehicle at the respective positions.

For example, when the other vehicle is traveling on a single curved road with a single lane, the action probability prediction unit 12 predicts the intention of action of following the lane (forward movement), and calculates a course along the lane on the map as the primary course. When the other vehicle is traveling on a single curved road with a plurality of lanes, the action probability prediction unit 12 predicts the intention of action of the forward movement and the intention of action of changing the lane to the right or the left (lane change). The primary course of the other vehicle with the intention of action upon the lane change is a course of changing lanes based on the road structure and a predetermined period of lane-change time. When the other vehicle is traveling toward an intersection, the action probability prediction unit 12 predicts the intention of action including a forward movement, a right turn, and a left turn, and calculates a forward-movement course, a right-turn course, and a left-turn course as the primary course based on the road structure at the intersection on the map. The calculation of the "primary course" takes the road structure into consideration, but does not take account of the behavior of the other vehicle integrated by the detection integration unit 2a.

In the traveling situation shown in Fig. 4, the action probability prediction unit 12 can calculate the intention of action that the other vehicle 52 would take to follow the left lane (forward movement) and the primary course 63. The action probability prediction unit 12 does not calculate the course 64 for avoiding the puddle 53 and keeping the traveling direction.

The first action-probability correction unit 13 takes account of a stationary object detected by the object detection device 1 to correct the probability of action predicted by the action probability prediction unit 12. In particular, the first action-probability correction unit 13 determines whether the primary course of the other vehicle and the position of the stationary object overlap with each other. When the primary course and the position overlap with each other, the first action-probability correction unit 13 further adds an intention of action and a primary course of the other vehicle 52 for avoiding the stationary object.

When another moving object (not shown) is detected by the object detection device 1 simultaneously with the other vehicle 52 shown in Fig. 4, the first action-probability correction unit 13 takes account of the other moving object to correct the probability of action predicted by the action probability prediction unit 12. In particular, the first action-probability correction unit 13 chronologically determines whether the other moving object and the other vehicle 52 overlap with each other. When the two moving objects overlap with each other, the first action-probability correction unit 13 further adds an intention of action and a primary course of the other vehicle 52 for avoiding the other moving object.

The road surface condition acquisition unit 18 acquires information on conditions of a road surface around the other vehicle 52. The "information on conditions of a road surface" includes conditions of a road surface with low frictional resistance (low-µ road) on which a vehicle tends to skid. Specific examples include information indicating a puddle 53 on a road surface, information indicating a part covered with snow on a road surface, and information indicating a frozen part on a road surface.

The "information on conditions of a road surface" also includes information indicating ruts on a road surface. The term "ruts on a road surface" refers to tracks created by wheels on an asphalted road surface, on a ground surface, or on a snow-covered surface, and further includes recesses or grooves on a surface rutted by wheels repeatedly following the same line on the road surface to scrape the asphalt or the ground. The tracks of wheels on a snow-covered surface refer to not only recesses or grooves on the snow-covered surface but also bottoms of recesses or grooves on which the asphalt or the ground is exposed. Water remaining in recesses or grooves on the road surface from which the asphalt or the ground is scraped may be detected as ruts on the road surface. Alternatively, points on the road surface partly dried due to wheels having repeatedly passed after rain stops may be detected as ruts on the road surface.

The road surface condition acquisition unit 18 can acquire the information on the conditions of the road surface from image data imaged by a camera mounted on the host vehicle 51, for example. The road surface condition acquisition unit 18 performs pattern recognition processing on the image data on the front side of the host vehicle 51 in the traveling direction so as to detect the conditions of the road surface. The conditions of the road surface may also be detected by use of a change in polarization characteristics when the road surface is wet or frozen to be in a mirror-surface state. In particular, the road surface condition acquisition unit 18 may use both a normal camera and a polarization camera including a polarizing lens so as to detect a position at which a difference between a normal image and a polarized image is large. Alternatively, the road surface condition acquisition unit 18 may acquire, from the outside of the host vehicle 51, the information from the dynamic map described above, for example, as the information on the conditions of the road surface. The method for acquiring the conditions of the road surface is not limited to the examples described above, and the present embodiment may use any other conventional method.

The forward object determination unit 19 determines whether any object is present ahead of the other vehicle 52 in the traveling direction. The forward object determination unit 19 may determine whether objects (stationary objects and moving objects) detected by the object detection device 1 include an object present ahead of the other vehicle 52 in the traveling direction, for example. The region ahead of the other vehicle 52 in the traveling direction refers to a region on the front side in the traveling direction defined by a straight line passing through the center of the other vehicle 52 and extending in the vehicle width direction. The forward object determination unit 19 detects a preceding vehicle 56 (refer to Fig. 5) traveling in the lane in which the other vehicle 52 is traveling or in its adjacent lane, a vehicle parked in the traveling lane or in the adjacent lane, or a pedestrian 55 (refer to Fig. 4) present in a pedestrian walkway along a road or a sidewalk adjacent to the road, for example.

The second action-probability correction unit 15 corrects the probability of action predicted by the action probability prediction unit 12 at least in accordance with the information on the conditions of the road surface detected by the road surface condition acquisition unit 18. In particular, when the information on the condition of the low-µ road (such as the puddle 53 shown in Fig. 4, a snow-covered part, or a frozen part) is acquired, the second action-probability correction unit 15 adds the intention of action and the primary course 64 of the other vehicle 52 for avoiding the point of the low-µ road. The second action-probability correction unit 15 further adds the intention of action and the primary course 63 of the other vehicle 52 for passing through the point of the low-µ road at a low speed.

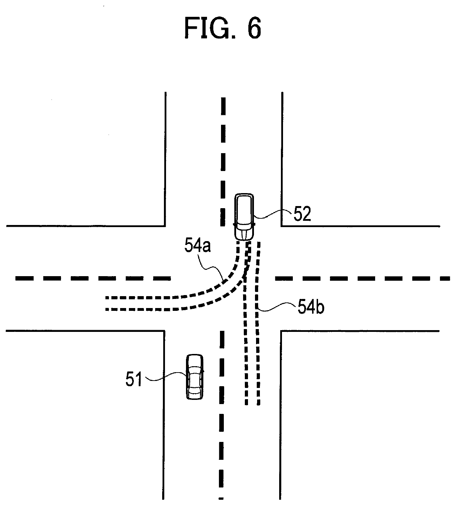

When the information of ruts on the road surface is acquired, the second action-probability correction unit 15 further adds an intention of action and a primary course of the other vehicle 52 for traveling along the ruts on the road surface. Fig. 6 illustrates a case in which the other vehicle 52 is stopping in front of an intersection or in the intersection, and ruts 54a and 54b are created on the road surface around the other vehicle 52. When the information of the ruts 54a and 54b on the road surface is acquired, the second action-probability correction unit 15 further adds the intention of action and the primary course of the other vehicle 52 for traveling along the respective ruts 54a and 54b.

The second action-probability correction unit 15 may correct the respective probabilities of action further added, in accordance with the determination results of the forward object determination unit 19. In particular, the second action-probability correction unit 15 estimates a likelihood ratio of the respective probabilities of action further added, depending on whether any object is present on the front side in the traveling direction.

For example, as shown in Fig. 4, when the pedestrian 55 is present in the sidewalk around the puddle 53, or when no preceding vehicle is present in the lane adjacent to the traveling lane of the other vehicle 52 (the right lane) around the puddle 53, the second action-probability correction unit 15 sets the possibility (the likelihood ratio) that the other vehicle 52 would choose the course 64 to be high, instead of the course 63.

As shown in Fig. 5, when the pedestrian 55 is not present in the sidewalk around the puddle 53, or when the preceding vehicle 56 is traveling in the lane adjacent to the traveling lane of the other vehicle 52 (the right lane) around the puddle 53, the second action-probability correction unit 15 sets the possibility (the likelihood ratio) of choosing the course 64 to be lower than the case of the traveling situation shown in Fig. 4, and sets the possibility (the likelihood ratio) of choosing the course 63 to be higher.

When both the pedestrian shown in Fig. 4 and the preceding vehicle 56 shown in Fig. 5 are present, the second action-probability correction unit 15 may further add a probability of action that the other vehicle 52 would take to pass through the puddle 53 while moving sufficiently slowly so as not to splash the water in the puddle 53 around, in accordance with the determination results of the forward object determination unit 19.

When no object (obstacle) is present along the ruts 54a or 54b shown in Fig. 6, the second action-probability correction unit 15 sets the likelihood ratio such that the probability of action is high that the other vehicle 52 would take to travel along the ruts 54a or 54b. When any object (obstacle) is present along the ruts 54a or 54b, the second action-probability correction unit 15 sets the likelihood ratio such that the probability of action is low that the other vehicle 52 would take to travel along the ruts 54a or 54b, and sets the likelihood ratio such that the probability of action is high that the other vehicle 52 would take to avoid the object (obstacle).

The course prediction unit 16 predicts a course (effective course) that the other vehicle 52 would follow, in accordance with the behavior detected by the behavior determination unit 11. In particular, the course prediction unit 16 calculates the effective course when the other vehicle 52 is presumed to take an action based on the intention of action predicted, by a conventional state estimation method such as Kalman filtering. As used herein, the term "effective course" encompasses profiles of positions of the other vehicle 52 at different times, and also profiles of velocities of the other vehicle 52 at the respective positions, as in the case of the primary course. The effective course and the primary course are common in that the other vehicle 52 would follow, but differ from each other in that the effective course is calculated in view of the behavior of the other vehicle 52, while the primary course is calculated without consideration of the behavior of the other vehicle 52.

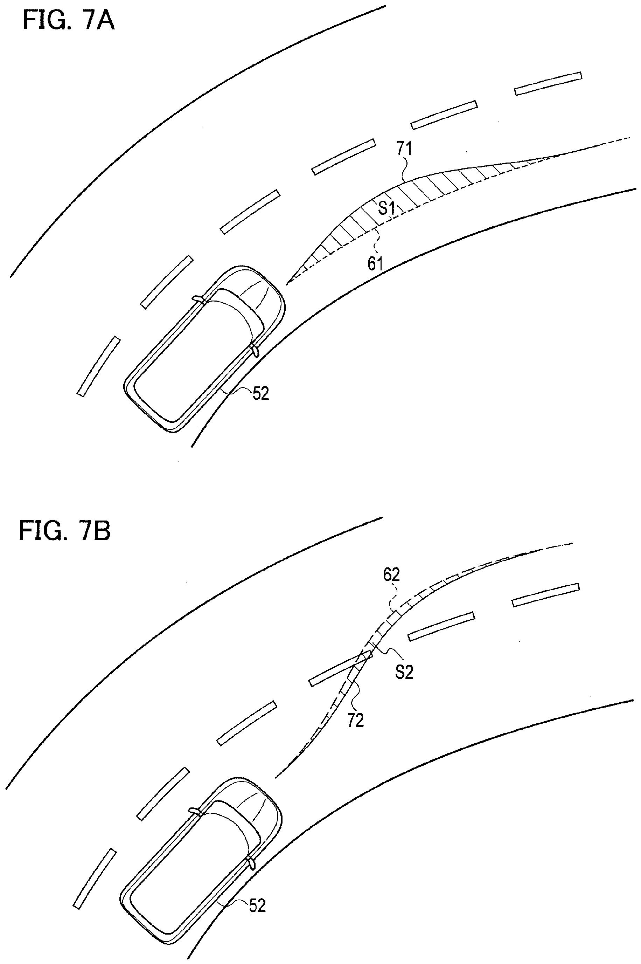

Fig. 7A and Fig. 7B illustrate primary courses (61 and 62) for the other vehicle 52 as examples calculated according to the intention of action and the road structure without the behavior of the other vehicle 52 taken into consideration. Since the current attitude (yaw angle) of the other vehicle 52 is not taken into consideration, for example, the respective primary courses (61 and 62) extend in different directions from the current position of the other vehicle 52. The course prediction unit 16 then takes account of the behavior of the other vehicle 52 to calculate the course (effective course) corresponding to the intention of action described above. Namely, the course prediction unit 16 calculates the effective course when the other vehicle 52 is presumed to take an action corresponding to the intention of action described above.

Fig. 4 and Fig. 5 also illustrate the primary courses (63 and 64) for the other vehicle 52 each calculated according to the intention of action of the other vehicle 52 and the road structure. The respective ruts (54a, 54b) on the road surface shown in Fig. 6 are still other examples of the primary courses that the other vehicle 52 would follow to travel along the ruts (54a, 54b).

The attitude (yaw angle) of the other vehicle 52 illustrated in Fig. 7A and Fig. 7B inclines to the left from the primary course 61 of the other vehicle 52 following the traveling lane. The velocity of the other vehicle 52 only has a velocity component in the traveling direction, and the velocity component in the vehicle width direction is zero. The other vehicle 52 is thus in the state of making a forward movement. When the other vehicle 52 is traveling in accordance with the intention of action of following the traveling lane on the basis of the above attitude and velocity, the other vehicle 52 travels along an effective course 71 which starts leaving the primary course 61 toward the left and then returns to finally conform to the primary course 61, as shown in Fig. 7A. In other words, the other vehicle 52 is presumed to follow a corrected course (overshoot course) generated such that the deviation from the traveling lane is corrected. The course prediction unit 16 thus predicts the effective course 71 conforming to the intention of action of following the traveling lane (forward movement) on the basis of the attitude (yaw angle) and the velocity of the other vehicle 52.

When the other vehicle 52 is traveling in accordance with the intention of action of changing the lanes on the basis of the same attitude and velocity, the other vehicle 52 travels along an effective course 72 which starts turning in the left direction to be shifted to the left lane, and then makes a slight turn toward the right to correct the direction so as to follow the left lane, as illustrated in Fig. 7B. Namely, the effective course 72 generated includes a left-turn clothoid curve and a right-turn clothoid curve starting from a state in which the steering angle is in a neutral position. The effective course 72 is thus used for the lane change which takes substantially the same time as the "predetermined period of lane-change time" used for the calculation of the lane-change course 62. The curves used when the effective course is generated are not necessarily the clothoid curves, and may be any other curves. As shown in Fig. 7B, the effective course 72 has substantially the same configuration as the primary course 62 for changing the lanes.

The course prediction unit 16 calculates the course corresponding to the intention of action (effective course) while taking account of the behavior of the other vehicle 52 also as to the respective primary courses (63 and 64) and the respective ruts (54a and 54b) presumed to be the primary courses shown in Fig. 4, Fig. 5, and Fig. 6, in the same manner as Fig. 7A and Fig. 7B.

For example, in the traveling situation shown in Fig. 4 and Fig. 5, the course prediction unit 16 calculates the respective effective courses for the other vehicle 52 conforming to the intention of action of passing through the puddle 53 while decelerating or moving slowly, or the intention of action of avoiding the puddle 53, on the basis of the position, the attitude (yaw angle), and the velocity of the other vehicle 52.

In the traveling situation shown in Fig. 6, the course prediction unit 16 calculates the effective course of the other vehicle 52 for traveling along the ruts 54a conforming to the intention of action of turning to the right at the intersection, and calculates the effective course of the other vehicle 52 for traveling along the ruts 54b conforming to the intention of action of moving forward through the intersection, on the basis of the position of the other vehicle 52.

Although the above cases take account of the position, the attitude, and the velocity as examples of the behavior of the other vehicle 52, the respective effective courses may be calculated in view of the acceleration or the deceleration of the other vehicle 52 instead. For example, the deceleration upon the lane change can be presumed to be greater than the case of the forward movement.

The likelihood ratio estimation unit 17 compares each probability of action predicted by the action probability prediction unit 12, the first action-probability correction unit 13, and the second action-probability correction unit 15 with the behavior of the other vehicle 52 integrated by the detection integration unit 2a, so as to predict the action of the other vehicle 52. The likelihood ratio estimation unit 17 predicts the action of the other vehicle 52 further in view of the likelihood ratio predicted by the second action-probability correction unit 15.

In particular, the likelihood ratio estimation unit 17 compares the primary course with the effective course for each of the probabilities of action predicted by the action probability prediction unit 12, the first action-probability correction unit 13, and the second action-probability correction unit 15. The likelihood ratio estimation unit 17 then calculates a likelihood ratio of the respective probabilities of action based on the difference between the primary course and the effective course. The likelihood ratio calculated is higher as the difference between the primary course and the effective course is smaller.

The likelihood ratio estimation unit 17 further weights the likelihood ratio of the respective probabilities of action depending on the likelihood ratio predicted by the second action-probability correction unit 15. For example, the likelihood ratio estimation unit 17 multiplies the likelihood ratio of the respective probabilities of action by the likelihood ratio predicted by the second action-probability correction unit 15 used as a coefficient. This calculation can integrate the likelihood ratio predicted by the second action-probability correction unit 15 with the likelihood ratio estimated by the likelihood ratio estimation unit 17. For example, in the traveling situation shown in Fig. 4, the likelihood ratio estimation unit 17 multiplies the likelihood ratio of the probability of action 64 of avoiding the puddle 53 by a greater coefficient than the likelihood ratio of the probability of action 63 of passing through the puddle 53 at a low speed.

The probability of action with the highest likelihood ratio can be determined to be the most reasonable when the behavior of the other vehicle 52 and the conditions of the road surface are taken into consideration. The likelihood ratio estimation unit 17 then determines that the probability of action estimated to have the highest likelihood ratio is the action that the other vehicle 52 takes. The difference between the primary course and the effective course is computed according to the sum of differences between the profiles of the positions or the velocities of the respective courses, for example. Fig. 7A and Fig. 7B illustrate the areas S1 and S2, each being a sum obtained by the integration of positional differences between the primary course and the effective course. The positional differences can be determined to be smaller as the area is smaller, so that a higher likelihood ratio is obtained. As another example, when the positional differences are small but the profiles of the velocities greatly differ, a smaller likelihood ratio is obtained. The likelihood ratio is an example of an index indicating the possibility that the probability of action results in being true, and any other indication may be used instead of the likelihood ratio.

The likelihood ratio estimation unit 17 also compares the primary course with the effective course for each of the probabilities of action (63, 64, 54a, and 54b) shown in Fig. 4 to Fig. 6 to calculate the likelihood ratio, and multiplies the calculated likelihood ratio by the coefficient (the likelihood ratio predicted by the second action-probability correction unit 15). The likelihood ratio estimation unit 17 then determines that the probability of action (63, 64, 54a, or 54b) estimated to have the highest likelihood ratio is the action that the other vehicle 52 takes.

As described above, the action prediction unit 10 predicts the action of the other vehicle 52 in accordance with the likelihood ratio of the respective probabilities of action estimated by the likelihood ratio estimation unit 17. The term "action of the other vehicle" encompasses the profiles of the course and the velocity of the other vehicle. The course of the other vehicle 52 refers to the profiles of the positions of the other vehicle 52 at different times.

The host-vehicle route generation unit 21 generates a route of the host vehicle 51 based on the action of the other vehicle 52 predicted by the action prediction unit 10. For example, when the action prediction unit 10 predicts the action 64 of the other vehicle 52 shown in Fig. 4, a route of the host vehicle 51 can be generated on the presumption that the other vehicle 52 deviates from its traveling lane. The route that the host vehicle 51 follows is a route not overlapping with the action (the intention) of the other vehicle 52 for avoiding the puddle 53. In particular, the host vehicle 51 follows the route to decelerate so as to allow the other vehicle 52 to pass by the puddle 53 prior to the host vehicle 51. The route that the host vehicle 51 follows may be a route causing the host vehicle 51 to move toward the right in the right lane when the lane width is sufficiently wide. Alternatively, the route may cause the host vehicle 51 to preliminarily change the lane to the right when there is still another lane on the right side.

The host-vehicle route generation unit 21 thus can generate the route that the host vehicle 51 can follow smoothly while avoiding a collision with the other vehicle 52 and avoiding sudden deceleration or quick steering required in response to the behavior of the other vehicle 52. The term "route of the host vehicle 51" encompasses profiles of positions of the host vehicle 51 at different times, and also profiles of velocities of the host vehicle 51 at the respective positions.

This embodiment predicts the action of the other vehicle 52 including the course of the other vehicle 52 according to the behavior of the other vehicle 52 on the map. The route generation for the host vehicle 51 based on the course of the other vehicle 52 thus corresponds to the route generation based on a change in relative distance to the other vehicle 52, acceleration or deceleration, or a difference in attitude angle.

For example, in the traveling situation shown in Fig. 4, when the other vehicle 52 decelerates and then stops in front of the puddle 53, the behavior of the other vehicle 52 can be presumed to indicate that the other vehicle 52 is willing to let the host vehicle 51 move ahead so that the other vehicle 52 can follow the course 64. In this case, generating the route of the host vehicle 51 or controlling the host vehicle 51 in view of the intention of action of the other vehicle 52, enables the host vehicle 51 to keep going without deceleration or to accelerate so as to pass by the puddle 53 prior to the other vehicle 52. This control can avoid the situation in which the host vehicle 51 and the other vehicle 52 yield the way to each other, so as to facilitate the flow of traffic accordingly.

The vehicle control unit 22 drives at least one of a steering actuator, an acceleration pedal actuator, and a deceleration pedal actuator in accordance with its position calculated by the position-in-map calculation unit 5 so that the host vehicle 51 travels to follow the route generated by the host-vehicle route generation unit 21. While the embodiment is illustrated with the case in which the host vehicle 51 is controlled in accordance with the generated route, the host vehicle 51 may be controlled regardless of the generation of the route of the host vehicle 51. In such a case, the host vehicle 51 can be controlled according to the relative distance to the other vehicle 52 or a difference in the attitude angle between the other vehicle 52 and the host vehicle 51.

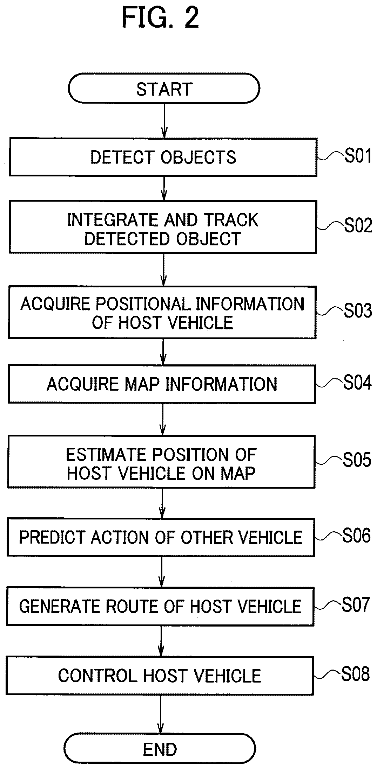

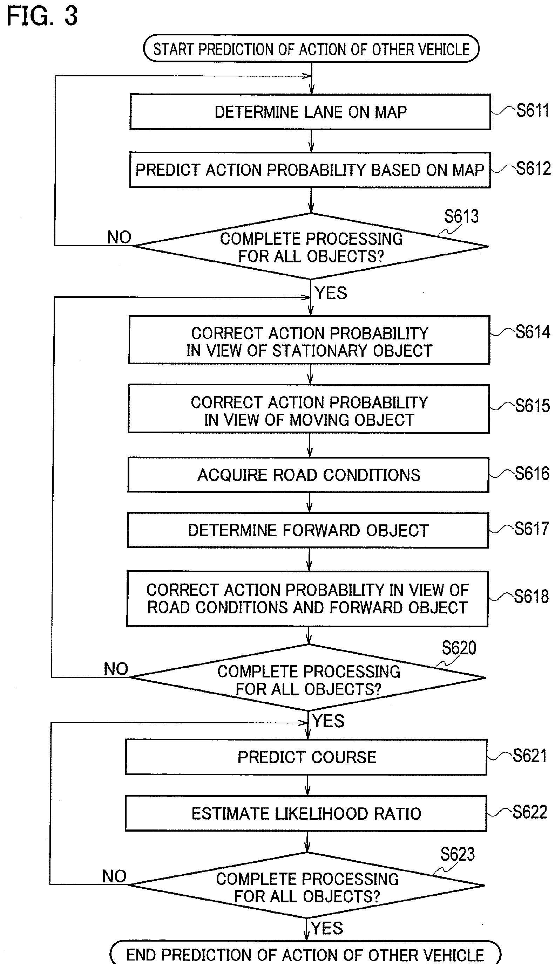

Atraveling assistance method using the traveling assistance device shown in Fig. 1 is described below with reference to Fig. 2 and Fig. 3. The microcomputer 100 shown in Fig. 1 may be used to function as an action prediction device for predicting the action of the other vehicle 52, so as to implement the traveling assistance method of finally outputting a result of a processing operation shown in step S06 in Fig. 2.

First, in step S01, the object detection device 1 detects behavior of objects around the host vehicle 51 by the respective object detection sensors. The process proceeds to step S02, and the detection integration unit 2a integrates a plurality of detection results obtained by the plural object detection sensors, and outputs a single detection result per object. The object tracking unit 2b tracks each object detected and integrated.

The process proceeds to step S03, and the host-vehicle position estimation device 3 measures the position, the attitude, and the velocity of the host vehicle 51 on the basis of a predetermined reference point by use of the position detection sensor. The process proceeds to step S04, and the map acquisition device 4 acquires the map information indicating the structure of the road on which the host vehicle 51 is traveling.

The process proceeds to step S05, and the position-in-map calculation unit 5 estimates the position and the attitude of the host vehicle 51 on the map according to the position of the host vehicle 51 measured in step S03 and the map data acquired in the step S04. The process proceeds to step S06, and the action prediction unit 10 predicts the action of the other vehicle 52 around the host vehicle 51 in accordance with the detection result (the behavior of the other vehicle 52) obtained in step S02 and the position of the host vehicle 51 specified in step S05.

The process in step S06 is described in more detail below with reference to Fig. 3. In step S611, the behavior determination unit 11 determines the road on which the other vehicle 52 is traveling and its traveling lane on the road according to the position of the host vehicle 51 on the map, and the behavior of the object acquired in step S02. The process proceeds to step S612, and the action probability prediction unit 12 predicts the probability of action of the other vehicle 52 based on the map. For example, the action probability prediction unit 12 predicts the intention of action according to the road structure.

The process proceeds to step S613, and the microcomputer 100 executes the process in steps S611 and S612 for all of the other vehicles 52 detected in step S01. After the process is executed (YES in step S613), the process proceeds to step S614, and the first action-probability correction unit 13 takes account of a stationary object simultaneously detected in step S01 to correct the probability of action predicted in step S612.

The process proceeds to step S615, and when another moving object is detected in step S01 simultaneously with the other vehicle 52, the first action-probability correction unit 13 takes account of the other moving object to correct the probability of action predicted in step S612.

The process proceeds to step S616, and the road surface condition acquisition unit 18 acquires the information on the condition of the road surface around the other vehicle 52. For example, the road surface condition acquisition unit 18 acquires the information of the puddle 53 shown in Fig. 4 and Fig. 5 and the ruts 54a and 54b shown in Fig. 6.

The process proceeds to step S617, and the forward object determination unit 19 determines whether the objects (stationary objects and moving objects) detected by the object detection device 1 include any object present ahead of the other vehicle 52 in the traveling direction. For example, the forward object determination unit 19 detects the preceding vehicle 56 traveling ahead of the other vehicle 52 (refer to Fig. 5), and the pedestrian 55 present in the sidewalk adjacent to the road (refer to Fig. 4).

The process proceeds to step S618, and the second action-probability correction unit 15 corrects the probability of action predicted by the action probability prediction unit 12 at least in accordance with the information on the condition of the road surface detected by the road surface condition acquisition unit 18. For example, when the information on the condition of the low-µ road (such as the puddle 53 shown in Fig. 4, a snow-covered part, or a frozen part) is acquired, the second action-probability correction unit 15 further adds the intention of action and the primary course 64 of the other vehicle 52 for avoiding the point of the low-µ road, and the intention of action and the primary course 63 of the other vehicle 52 for passing through the point of the low-µ road at a low speed. When the information of the ruts 54a and 54b on the road surface is acquired, as shown in Fig. 6, the second action-probability correction unit 15 further adds the intention of action and the primary course of the other vehicle 52 for traveling along the respective ruts 54a and 54b.

The second action-probability correction unit 15 estimates a likelihood ratio of each of the probabilities of action further added, depending on whether any object is present ahead of the other vehicle 52 in the traveling direction. For example, the second action-probability correction unit 15 regulates the likelihood ratios of the course 63 and the course 64 depending on the presence or absence of the pedestrian 55 shown in Fig. 4 and the preceding vehicle 56 shown in Fig. 5.

The process proceeds to step S620, and the microcomputer 100 executes the process from steps S614 to S618 for all of the other vehicles detected in step S01. After the process is executed (YES in step S620), the process proceeds to step S621, and the course prediction unit 16 calculates the effective course (71 and 72, refer to Fig. 7A and Fig. 7B) of the other vehicle 52 when the other vehicle 52 keeps its behavior and is presumed to take an action based on the intention of action predicted, by a conventional state estimation method such as Kalman filtering.

The process proceeds to step S622, and the likelihood ratio estimation unit 17 compares the primary course (63, 64, 54a, 54b) with the effective course for each of the probabilities of action predicted in steps S612, S614, S615, and S618. The likelihood ratio estimation unit 17 then calculates a likelihood ratio of the respective probabilities of action based on the difference between the primary course and the effective course. The likelihood ratio estimation unit 17 further weights the likelihood ratio of the respective probabilities of action in accordance with the likelihood ratio estimated in step S618. The likelihood ratio estimation unit 17 determines that the probability of action estimated to have the highest likelihood ratio is the action that the other vehicle 52 takes.

The process proceeds to step S623, and the microcomputer 100 executes the process in steps S621 and S622 for all of the other vehicles detected in step S01. The specific process in step S06 shown in Fig. 2 thus ends.

The process proceeds to step S07 shown in Fig. 2, and the host-vehicle route generation unit 21 generates a route of the host vehicle 51 based on the actions of the other vehicles predicted in step S06. The process proceeds to step S08, and the vehicle control unit 22 controls the host vehicle 51 so as to lead the host vehicle 51 to travel to follow the route generated in step S07.

As described above, the embodiment can achieve the following effects.

The microcomputer 100 (an example of a controller) acquires the information on the conditions of the road surface, and predicts the action of the other vehicle 52 based on the conditions of the road surface, so as to enhance the accuracy of predicting the action of the other vehicle 52. Since the course of the host vehicle 51 can be corrected in view of the action of the other vehicle 52 according to the conditions of the road surface, quick steering or sudden deceleration of the host vehicle 51 can be reduced.

The microcomputer 100 (an example of a controller) predicts the action of the other vehicle 52 while taking account of whether any object is present ahead of the other vehicle 52 in the traveling direction, in addition to the conditions of the road surface. The microcomputer 100 thus can predict the action of the other vehicle 52 more accurately, avoiding quick steering or sudden deceleration of the host vehicle 51 accordingly.

The acquisition of the information of the puddle 53 on the road surface enables the accurate prediction of the action of the other vehicle 52. The action of the other vehicle 52 is predicted in accordance with the information of the puddle 53, so as to correct the course of the host vehicle 51. For example, when an object and the puddle 53 are present ahead of the other vehicle 52 in the traveling direction, the action that the other vehicle 52 would take to avoid the puddle 53 or to pass through the puddle 53 without avoiding can be predicted precisely.

As shown in Fig. 6, the situation in which the other vehicle 52 is stopping, namely, the other vehicle 52 is a stationary object, may impede the determination of the attitude and the traveling direction of the other vehicle 52 depending on the configurations of the sensors detecting the other vehicle 52. For example, when the stopping other vehicle 52 is detected by a camera or a laser rangefinder, the traveling direction of the other vehicle 52 cannot be easily specified according to the attitude of the other vehicle 52. In view of this, the conditions of the road surface (the ruts 54a and 54b) are detected so that the action of the other vehicle 52 is predicted in accordance with the detected conditions. This enables the prediction of the action of the other vehicle 52 with high accuracy if the attitude and the traveling direction of the other vehicle 52 are difficult to specify.

The use of the information of the ruts 54a and 54b on the road surface can accurately predict the action that the other vehicle 52 would take to travel along the ruts 54a and 54b.

While the present invention has been described above by reference to the embodiment, it should be understood that the present invention is not intended to be limited to the above descriptions, and various alternatives and modifications will be apparent to those skilled in the art.

While the above embodiment has been illustrated with the case in which the host vehicle 51 is in an autonomous driving mode capable of autonomous traveling, the host vehicle 51 may be in a manual driving mode operated by the driver of the host vehicle 51. In such a case, the microcomputer 100 may control, for the operation of the host vehicle 51 (for driving support), a speaker, a display, and a user interface thereof for guiding the driver in operating the steering wheel, the accelerator, and the brake by use of voice or images.

While the above embodiment has been illustrated with the case of regulating the course of the host vehicle 51 in accordance with the course of the other vehicle 52 predicted, the traveling assistance performed on the host vehicle 51 is not limited to this case. The embodiment may also be applied to a case of executing the autonomous driving control or the traveling assistance control (including autonomous braking) based on the prediction results, including the operation of accelerating and decelerating, preliminarily decelerating, controlling a position within a lane, moving to an edge of a road, and considering the order of passage of lanes, for example. The above control can avoid sudden braking or sudden acceleration and deceleration of the host vehicle 51, so as to prevent the occupant from feeling uncomfortable.

### REFERENCE SIGNS LIST

51 HOST VEHICLE
52 OTHER VEHICLE
53 PUDDLE (CONDITION OF ROAD SURFACE)
54a, 54b RUTS (CONDITION OF ROAD SURFACE)
55 PEDESTRIAN (OBJECT AHEAD OF OTHER VEHICLE IN TRAVELING DIRECTION)
56 PRECEDING VEHICLE (OBJECT AHEAD OF OTHER VEHICLE IN TRAVELING DIRECTION)
100 MICROCOMPUTER (CONTROLLER)

## Claims

1. An action prediction method of a traveling assistance device for assisting a host vehicle in traveling in accordance with a predicted result of an action of another vehicle around the host vehicle, the method comprising:
acquiring information on a condition of a road surface around the other vehicle; and
predicting the action of the other vehicle in accordance with the information on the condition of the road surface.

2. The action prediction method of the traveling assistance device according to claim 1, further comprising:
determining whether an object is present ahead of the other vehicle in a traveling direction; and
predicting the action of the other vehicle in accordance with the information on the condition of the road surface and a determination result of a presence or absence of the object.

3. The action prediction method of the traveling assistance device according to claim 1 or 2, wherein the information on the condition of the road surface acquired is information of a puddle on the road surface.

4. The action prediction method of the traveling assistance device according to claim 1, wherein the other vehicle is stopping.

5. The action prediction method of the traveling assistance device according to any one of claims 1 to 4, wherein the information on the condition of the road surface acquired is information of ruts on the road surface.

6. An action prediction device of a traveling assistance device comprising a controller for predicting an action of another vehicle around a host vehicle in accordance with a position of the other vehicle,
the controller being configured to:
acquire information on a condition of a road surface around the other vehicle; and
predict the action of the other vehicle in accordance with the information on the condition of the road surface.
